Europäisches Patentamt

(19) European Patent Office

Office européen des brevets

(11) Publication number: **0 239 185**
**B1**

(12) **EUROPEAN PATENT SPECIFICATION**

(45) Date of publication of the patent specification:
**29.08.90**

(21) Application number: **87300446.9**

(22) Date of filing: **20.01.87**

(51) Int. Cl.⁵: **B60R 13/10**

(54) **Magnetic mounting means.**

(30) Priority: **27.03.86 GB 8607821**

(43) Date of publication of application:
**30.09.87 Bulletin 87/40**

(45) Publication of the grant of the patent:
**29.08.90 Bulletin 90/35**

(84) Designated Contracting States:
**BE CH DE FR GB IT LI NL SE**

(56) References cited:
**FR-A- 1 586 369**
**GB-A- 968 487**
**US-A- 3 440 748**
**US-A- 3 665 355**

(73) Proprietor: **PORTER DUAL CONTROLS LIMITED, Forval Close Wandle Way, Mitcham Surrey CR4 4NE(GB)**

(72) Inventor: **Ellis, Derek Edwin, The Columbary Woodcote Park, Epsom Surrey(GB)**

(74) Representative: **Fry, Alan Valentine, FRY HEATH & CO. St. Georges House 6 Yattendon Road, Horley Surrey RH6 7BS(GB)**

ACTORUM AG

## Description

This invention relates to a means for mounting a structure by magnetic attraction on a substructure of a magnetic material.

Whilst in no way restricted to such use, the invention is of particular applicability in the securing of structures, such as signs, to the complexedly curved steel roofs of motor vehicles.

The object of the invention is to provide such a mounting means which incorporates magnetic attraction applied over a relatively broad zone, whilst nevertheless being capable of adapting itself to a contour of the substructure within the confines of that zone, and in particular to two curvatures of the sub-structure in two directions, e.g. at a right angle.

Magnetic mountings are known from FR-A 1 586 369 for attaching a support for a sign to the roof of a vehicle. The mounting disclosed by FR-A 1 586 369 comprises a pair of flexible magnetic sheet members which, in use, adapt themselves to the contour and lie in contact with the vehicle roof. The mounting disclosed includes two spaced members for connecting the magnetic members to the support for the sign.

According to the present invention there is provided a magnetic mounting for attaching a support for a sign to the roof of a vehicle, the mounting comprising a flexible permanently magnetic member which, in use, adapts itself to the contour of and lies intimately in contact with at least island sites of a surface of the vehicle roof, the mounting including two spaced joint assemblies for connecting the magnetic member to the support, the magnetic mounting being characterised in that each joint assembly comprises a cup secured to the magnetic member and having inner and outer part-spherical surfaces embraced respectively by inner and outer bearing members, and fixing means for retaining the bearing members in assembly and permitting rotational movement of the bearing members with respect to the cup about the cup centre.

Advantageously, the flexible magnetic member comprises a layer of flexible material, such as rubber and/or synthetic resinous plastics, having permanent magnetic properties.

Preferably, the fixing means are tightenable for retaining the bearing members in a position to which they are set, whilst conforming to the curvature of the vehicle roof. By way of example, the tightening means comprises a bolt carrying a nut which can be tightened thereon to draw elements of the joint assembly into tight engagement. The bolt and nut may likewise serve to secure the outer bearing member to the support.

Where the magnetic member is adapted to be magnetically attracted to the vehicle roof over the whole of the surface of the magnetic member, the joint assemblies are preferably secured to the respective area of the magnetic member by means which are recessed within the magnetic member so as not to protrude against the surface of the vehicle roof, e.g. rivets engaged in recesses in the exposed surface of the magnetic member.

Means may be provided to facilitate separation of the magnetic member from the vehicle roof against the magnetic force. In a preferred form, the separation means comprise a lifter, which may be manually operable, secured to a point of the magnetic member adjacent to an edge thereof and extending inboard of the point of securing for abutment against the magnetic member, e.g. well inboard of that edge, say two-thirds. The lifter may thus be a handle pivoted to the base.

An embodiment of the invention is shown in the accompanying drawings, wherein:

Figure 1 is a plan view of the mounting;

Figure 2 is an underplan view of the mounting;

Figure 3 is an end elevation of the mounting in position on a metallic structure;

Figure 4 is a side elevation of the mounting in position on a metallic structure;

Figure 5 is a partial vertical section taken on the line V–V in Figure 1; and

Figure 6 is a perspective sectional elevation, with parts shown in separated condition, of a universal joint assembly.

In the following description, given by way of illustrative example only, the magnetic mounting of the invention is described in relation to its attachment to the steel roof of a vehicle, the roof having curvatures in two angles at a right angle, as seen in Figures 3 and 4.

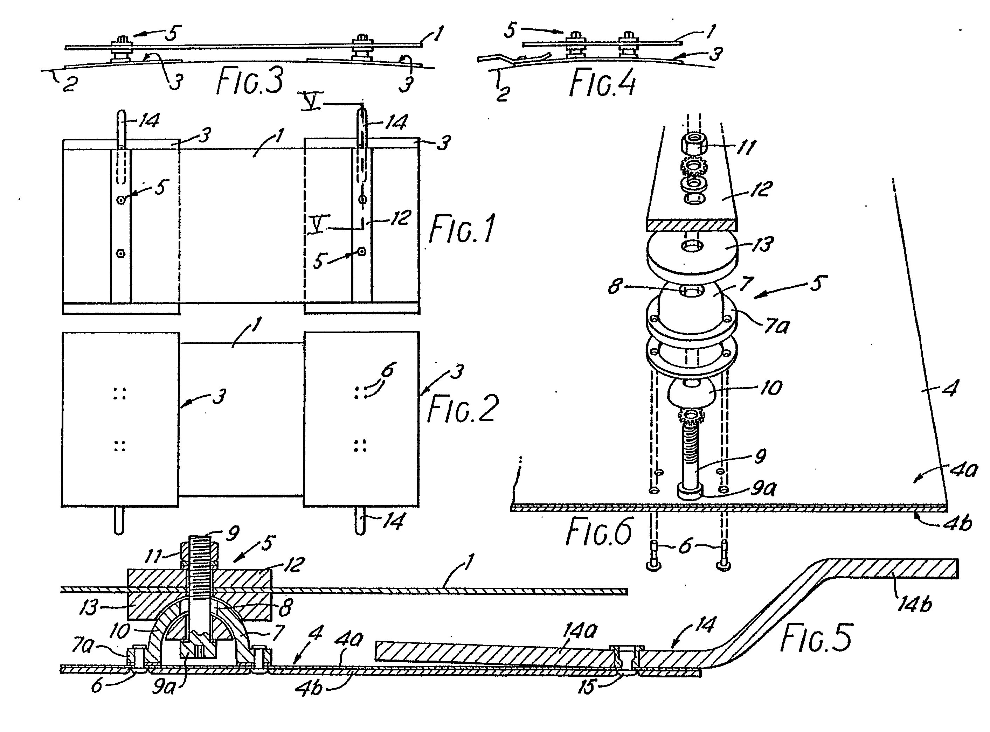

Referring to Figures 1 and 2, the mounting has a rigid baseplate or tray 1 which may support or be incorporated in any desired item to be carried by the mounting, e.g. a sign carried on the roof of the vehicle.

The nature of the structure carried is immaterial. The tray 1 is supported relative to the vehicle roof 2 (see Figures 3 and 4) by a pair of assemblies 3, 3, carried at spaced positions below the tray 1. Each assembly 3, 3 comprises a flexible magnetic member 4 (see Figure 5) which is attached to the tray 1 by a universally-movable joint assembly 5.

The magnetic member 4 comprises a relatively stiff but nevertheless flexible metal backing sheet 4a beneath which is a flexible sheet 4b of a permanently magnetic synthetic compound material. The magnetic sheet material is bonded to the backing sheet. The magnetic sheet material could be, for example, the proprietary material marketed under the Trade Marks "PLACOR" and "PLACAM". The magnetic sheet material is (a) capable of flexing so as to lie snugly against the surface of the steel roof 2, and (b) very strongly adherent to the roof 2, by virtue of its magnetism.

The magnetic sheet 4b is cut away at four small areas to accommodate the (sunken) heads of four rivets 6 which attach to the member 4 a part-spherical inverted cup 7 having a flange 7a bored to receive the rivets 6. The cup 7 has a central clearance aperture 8 in which is received a bolt 9 having its head 9a engaging, through a washer, with the underside of a part-ball 10 seated within the cup 7 and serving as an inner holding element. The other end of the bolt 9 receives a nut 11 permitting the bolt 9 to clamp a cross-member 12 of the tray 1, the tray 1 itself, and a bearing outer member 13, serving as an outer holding element, having a part-spherical reces to receive the part-spherical upper face of the cup 7. It will be seen that the mating part-spherical surface of the part-ball 10, and of the cup 7, and of the outer member 13, will permit the cup 7 to move relatively in all directions, about the geometrical centre of those surfaces, to an extent which is limited by the central clearance aperture 8 of the cup 7. This possibility of universal movement permits the cup 7 to (a) assume any position of inclination dictated by the magnetic engagement of the member 4 on the vehicle roof, and (b) be tightened, in that position of movement, to the tray 1. Once the correct position has been achieved, the nut 11 can then be tightened to lock the joint assembly.

As can be seen from Figures 3 and 4, the roof 2 has curvature in two directions at a right angle, and the cups 7 are correspondingly inclined relative to the plane of the tray 1.

As the magnetic member 4 can conform entirely to the surface and curvature of the roof 2, the magnetic force holding the two together is extremely high. By way of simple illustration, an experiment using a magnetic mounting having the material referred to above gave the following results: The mounting constructed as seen in these figures has two assemblies 3,3 each 15 inches (38.1 cm) by 19 3/4 inches (50.2 cm). On the tray 1 there was secured an upstanding sign of triangular vertical section and 54 inches (137.2 cm) in length and 17 inches (43.18 cm) in width at its base, with a height of 12 inches (30.5 cm). The entire structure was secured, by its magnetism only, on the steel roof of a vehicle. The vehicle was then subjected to tests in a wind tunnel, with the sign (a) end-on, and (b) broadside on to the airflow. In the end- on position, the sign remained in position in the vehicle roof at up to a wind speed of 210 m.p.h (338 kmp.h), which was the maximum available. In the broadside-on position, the sign remained in position on the vehicle roof at up to a wind speed of 130 m.p.h (209.2 km p.h), at which point the structure of the sign itself (not of the mounting) started to buckle.

To achieve the maximum secure magnetic adherence of the magnetic members 4 to the vehicle roof or other metal structure, it is desirable to ensure that the joint assemblies 5 shall be positioned well inboard of the edges of the sheet members 4, i.e. as seen in Figures 1 and 2.

The adherence of the sheet members 4 to the metal roof is enhanced if the sheet members 4 lie snugly against the metal roof all over their area. Removal of the sheet members 4 from the metal roof can in practice only be achieved by a form of- "peeling" action. It is necessary to lift a small edge portion of the sheet member 4, and then progressively peel off the remainder of the sheet member. To facilitate this operation, there may be provided a lifter denoted generally by the reference numeral 14 in Figure 5. This comprises a handle-like bar 14a which is secured by a rivet 15, having its head recessed in the magnetic sheet 4b, to a part adjacent the edge of the sheet member 4. The bar 14a is cranked to provide a handle 14b for ease of operation. To commence the "peeling" action, the bar 14a is lifted by the handle 14b, and the rivet 15 drags up a small zone of the sheet member 4 and parts it from the vehicle roof 2.

Thereafter, the upward movement of the handle 14b causes progressive lifting of the member 4 which can eventually be wholly lifted away from the vehicle roof. In practice, in a convenient construction, the lifter 14 is rotated, after engagement of the mounting on the roof, from the laterally-extended position of Figures 1, 2 and 5 through 90° so as to lie in the transverse direction, such that attachment of the remainder of the sign onto the tray 1effectively covers the lifter 14 and makes it thiefproof.

## Claims

1. A magnetic mounting for attaching a support (1) for a sign to the roof (2) of a vehicle, the mounting comprising a flexible permanently magnetic member (4) which, in use, adapts itself to the contour of and lies intimately in contact with at least island sites of a surface of the vehicle roof, the mounting including two spaced joint assemblies (5) for connecting the magnetic member (4) to the support (1), the magnetic mounting being characterised in that each joint assembly (5) comprises a cup (7) secured to the magnetic member (4) and having inner and outer part-spherical surfaces embraced respectively by inner and outer bearing members (10, 13), and fixing means (9, 11) for retaining the bearing members (10, 13) in assembly and permitting rotational movement of the bearing members (10, 13) with respect to the cup (7) about the cup centre.

2. A magnetic mounting as claimed in Claim 1 characterised in that it comprises a pair of flexible permanently magnetic members (4).

3. A magnetic mounting as claimed in Claim 1 or Claim 2, characterised in that the or each magnetic member (4) comprises a flexible layer having permanent magnetic properties.

4. A magnetic mounting as claimed in any one of Claims 1 to 3 characterised in that the fixing means (9, 11) is tightenable to retain the bearing members (10, 13) in a set position.

5. A magnetic mounting as claimed in any one of Claims 1 to 4 characterised in that it incorporates a lifter (14) secured to a point of the magnetic member (4) adjacent an edge thereof and extending inboard of the securement point for abutment against the magnetic member (4).

## Patentansprüche

1. Eine magnetische Haltevorrichtung zum Befestigen einer Halterung (1) für eine Dachwerbung (2) auf dem Fahrzeug, die Haltevorrichtung besteht aus einem flexiblen, permanent magnetischen Bauteil (4), welcher sich bei Gebrauch der Form des Daches anpaßt und im engen Kontakt mit der Dachoberfläche, oder inselartigen Teilen der Dachoberfläche, aufliegt, die Haltevorrichtung umfaßt weiters zwei Abstands-Gelenkseinheiten (5) zum Verbinden des magnetischen Bauteils (4) zur Halterung (1), die magnetische Halterung zeichnet sich dadurch aus daß eine jede Gelenkseinheit (5) aus einer Schale (7) besteht die an den magnetischen Bauteil (4) befestigt ist und innere und äußere, teilweise kugelförmige Oberflächen aufweist, welche selbst durch innere und äußere Lagerschalen (10, 13 ) umgeben sind, sowie aus Befestigungen (9, 11) zur Befestigung der Lagerschalen (10, 13) in dieser Einheit, so daß eine Drehbewegung der Lagerschalen (10, 13) mit Bezug auf die Schale (7) um die Schalenmitte möglich ist.

2. Eine magnetische Halterung wie oben beschrieben unter Patentanspruch (1), die sich dadurch auszeichnet, daß sie ein Paar flexibler permanent magnetischer Bauteile (4) beinhaltet.

3. Eine magnetische Halterung wie oben beschrieben unter Patentanspruch (1) und (2), die sich dadurch auszeichnet, daß der, oder jeder magnetische Bauteil (4) eine flexible Schicht mit Dauermagneteigenschaften aufweist.

4. Eine magnetische Halterung wie oben beschrieben unter Patentanspruch (1) bis (3), die sich dadurch auszeichnet, daß die Befestigungen (9, 11) angezogen werden können, so daß die Lagerteile (10, 13) in einer bestimmten Stellung festgehalten werden können.

5. Eine magnetische Halterung wie oben beschrieben unter Patentanspruch (1) bis (4), die sich dadurch auszeichnet, daß ein Hebearm (14) an einer Stelle des magnetischen Bauteils (4) und zwar nahe am Rand angebracht wird und dieser Arm reicht nach innen vom Befestigungspunkt, so daß er am magnetischen Bauteil (4) anstößt.

**Revendications**

1. Un montage magnétique servant à attacher le support (1) d'un panneau de pavillon (2) de véhicule, ce montage comprenant une traverse (4) souple à aimant permanent qui, en service, s'adapte au contour de quelques petites parties isolées de la surface du pavillon du véhicule, et qui entre intimement en contact avec celles-ci, le montage comprenant deux ensembles articulés avec un espace entre eux (5) pour relier la traverse magnétique (4) au support (1), le montage magnétique étant caractérisé par le fait que chaque ensemble articulé (5) comprend une coupelle (7) fixée à la traverse magnétique (4) dont les surfaces interne et externe partiellement sphériques réunies respectivement par les traverses de support interne et externe (10, 13), et des moyens de fixation (9, 11) permettant de retenir les traverses de portée (10, 13) réunies, et permettant un déplacement rotationnel des traverses de portée (10, 13) par rapport à la coupelle (7), autour du centre de la coupelle.

2. Un montage magnétique tel qu'il est sollicité dans la sollicitation 1, caractérisé par le fait qu'il comprend un paire de traverses (4) souples à aimant permanent.

3. Un montage magnétique tel qu'il est sollicité dans la sollicitation 1 ou la sollicitation 2, caractérisé par le fait que la traverse magnétique (4) ou que chacune des traverses magnétiques comprend une couche souple présentant des propriétés magnétiques permanentes.

4. Un montage magnétique tel qu'il est sollicité dans l'une des sollicitations 1 à 3, caractérisé par le fait que le moyen de fixation (9, 11) est resserrable pour retenir les traverses de support (10, 13) dans une position donnée.

5. Un montage magnétique tel qu'il est sollicité dans l'une des sollicitations 1 à 4, caractérisé par le fait qu'il incorpore une patte de levage (14) assujettie à un point de la traverse magnétique (4) adjacent à un bord de celle-ci, et dépassant vers l'intérieur du point de fixation pour venir buter contre la traverse magnétique (4).

Fig.1

Fig.2

Fig.3

Fig.4

Fig.5

Fig.6